# EUROPÄISCHE PATENTSCHRIFT

(11) **EP 3 609 594 B1**
(45) Veröffentlichungstag und Bekanntmachung des Hinweises auf die Patenterteilung: **11.08.2021**
(21) Anmeldenummer: 18712861.6
(22) Anmeldetag: 19.03.2018
(51) Int. Cl.: B01D 29/21, B01D 29/96

(54) **VORRICHTUNG ZUM AUSTAUSCHEN EINES FILTERELEMENTS**
DEVICE FOR REPLACING A FILTER ELEMENT
DISPOSITIF SERVANT À REMPLACER UN ÉLÉMENT FILTRANT

(30) Priorität: 12.04.2017 DE 102017003579
(43) Veröffentlichungstag der Anmeldung: 19.02.2020
(73) Patentinhaber: Hydac Fluidcarecenter GmbH, 66280 Sulzbach/Saar (DE)
(72) Erfinder: SCHOLL, Thomas, 66740 Saarlouis (DE); HAUPENTHAL, Jonas, 66606 St. Wendel (DE)
(74) Vertreter: Bartels und Partner, Patentanwälte
(86) Internationale Anmeldenummer: PCT/EP2018/056905
(87) Internationale Veröffentlichungsnummer: WO 2018/188903

(56) Entgegenhaltungen:
- DE-A1- 2 638 142
- DE-A1- 10 239 241
- JP-A- 2002 018 209
- US-A- 5 141 637

## Beschreibung

Die Erfindung betrifft eine Kombination aus einem in einem Filtergehäuse zumindest teilweise aufgenommenen, insbesondere verbrauchten, Alt-Filterelement und einem in dieses Filtergehäuse einzuwechselnden, insbesondere unverbrauchten, Neu-Filterelement gemäß den Merkmalen im Oberbegriff von Anspruch 1.

In Anlagen, die mit Betriebsfluiden wie Hydraulikflüssigkeiten, Kühlschmiermitteln, Kraftstoffen, Schmierölen und dergleichen arbeiten, sind Filtervorrichtungen, die mit auswechselbaren Filterelementen arbeiten, wichtige Systembestandteile. Betriebsstörungen oder gar Ausfälle solcher Filtervorrichtungen können zu Beschädigungen oder der Zerstörung nachgeordneter Systeme führen, was wirtschaftliche Schäden verursachen kann. Aufgrund der der Betriebssicherheit zukommenden großen Bedeutung ist es daher unerlässlich, die Filtervorrichtungen sorgfältig zu warten. Eine der wichtigsten Wartungsmaßnahmen ist die bedarfsgerechte Auswechslung von Filterelementen, um sicherzustellen, dass verbrauchte Alt-Filterelemente rechtzeitig durch unverbrauchte Neu-Filterelemente ersetzt werden. Bei im Filtergehäuse eingebauten Filterelementen gestaltet sich der Austausch verhältnismäßig umständlich und dementsprechend zeit- und arbeitsaufwändig. Bei den üblichen Filtervorrichtungen mit in einem Filtergehäuse verbautem Filterelement, wie beispielhaft in DE 10 2011 106 909 B3 aufgezeigt, ist für den Filterelementwechsel ein Gehäusedeckel abzunehmen, um den Zugang zum auszuwechselnden Filterelement zu ermöglichen. Auch bei abgenommenem Deckel ist das im Gehäuse verbaute Filterelement durch die Gehäuseöffnung hindurch schwer greif- und handhabbar, so dass sich der Wechselvorgang verhältnismäßig umständlich, zeit- und arbeitsaufwändig gestaltet.

Filterelemente gehen aus der US 5 141 637, der DE 102 39 241 A1, der JP 2002-018209 A und der DE 26 38 142 A1 hervor.

Im Hinblick auf diese Problematik stellt sich die Erfindung die Aufgabe, eine Vorrichtung zur Verfügung zu stellen, die den Austausch verbrauchter Filterelemente gegen neue Filterelemente wesentlich vereinfacht.

Erfindungsgemäß ist diese Aufgabe durch eine Vorrichtung gelöst, die die Merkmale des Patentanspruchs 1 in seiner Gesamtheit aufweist.

Gemäß dem Kennzeichen von Anspruch 1 ist vorgesehen, dass das Filtergehäuse randseitig über einen Randverlauf mit einzelnen, in Auszugsrichtung des Filterelements vorstehenden Rampen verfügt, die zumindest teilweise während des Verdrehens des Filterelementverbundes von mindestens einem Kupplungsteil, insbesondere dem Kupplungsteil des Alt-Filterelements, derart anfahrbar sind, dass die axiale Auszugsbewegung des Filterelements aus dem Filtergehäuse erleichtert ist. Ein vom Bediener am Beginn eines Auswechselvorgangs nach dem Herstellen der Kupplungsverbindung vorgenommenes Verdrehen des Neu-Filterelements führt beim Überlaufen der Rampen zu einem Hub des Filterelementverbundes in Auszugsrichtung und dadurch zum Ausheben des Sitzes der Dichteinrichtungen, die am Alt-Filterelement die Abdichtung zum Filtergehäuse bilden. Die weitere Auszugsbewegung ist dadurch vom Bediener ohne Kraftaufwand mühelos durchführbar.

Demgemäß sieht die Erfindung am einzuwechselnden Neu-Filterelement eine Kupplungseinrichtung vor, die mit einer weiteren Kupplungseinrichtung am Alt-Filterelement eine wieder lösbare Kupplung ausbildet, die im gekuppelten Zustand das Ausbringen des Alt-Filterelements aus dem Filtergehäuse mittels des Neu-Filterelements ermöglicht. Bei hergestellter Kupplung steht das Neu-Filterelement als bequem greifbare, großflächige Handhabe zur Verfügung, mittels deren das Alt-Filterelement leicht und bequem aus dem Filtergehäuse herausziehbar ist. Der für Filterwechsel aufzubringende Wartungsaufwand ist dadurch in besonderem Maße reduziert.

Mit besonderem Vorteil kann die Anordnung so getroffen sein, dass Alt- und Neu-Filterelement zumindest im Umfang der herzustellenden Kupplung gleich ausgebildet sind, indem das jeweilige Filterelement an seiner einen Stirnseite die eine Kupplungseinrichtung und an seiner anderen, gegenüberliegenden Stirnseite die weitere Kupplungseinrichtung aufweist. Bei allen Filterelementen können daher die einen Kupplungseinrichtungen jeweils durch Gleichteile und die weitere Kupplungseinrichtung ebenfalls durch jeweils Gleichteile gebildet sein.

Bei besonders vorteilhaften Ausführungsbeispielen ist die jeweilige Kupplungseinrichtung eines jeden Filterelements einstückiger Bestandteil einer zuordenbaren Endkappe, die dem Festlegen des filtrierenden Elementmaterials dieses Filterelements dient. In rationeller Weise lassen sich dadurch die Kupplungseinrichtungen zusammen mit den Endkappen als Kunststoff-Spritzgussteile herstellen.

Mit besonderem Vorteil kann die jeweilige, die Kupplung bildende Kupplungseinrichtung vorspringende Kupplungsteile aufweisen, die, ausgehend von einem ungekuppelten Zustand, durch Verdrehen des einen Filterelements gegen das andere Filterelement, insbesondere des Neu-Filterelements gegen das Alt-Filterelement, unter Bildung des gekuppelten Zustands in Eingriff miteinander gelangen. Der Filterwechsel lässt sich dadurch auf besonders einfache und bequeme Weise durch eine kombinierte Dreh- und Ausziehbewegung an dem ergriffenen Neu-Filterelement durchführen.

Die Anordnung kann mit besonderem Vorteil so getroffen sein, dass die in Eingriff miteinander befindlichen Kupplungsteile derart eine axiale Kraftübertragung zwischen den gekuppelten Filterelementen entlang deren jeweiliger Längsachse erlauben, dass durch Ziehen von Hand am Neu-Filterelement das Alt-Filterelement aus dem Filtergehäuse entfernbar ist. Dabei sind die Kupplungseinrichtungen derart ausgelegt, dass nach Entfernen des Alt-Filterelements aus dem Filtergehäuse die Kupplung des Verbundes von Alt- und Neu-Filterelement lösbar und das Neu-Filterelement in dieses Filtergehäuse anschließend einsetzbar ist.

Bei vorteilhaften Ausführungsbeispielen sind die Kupplungsteile zu Gruppen, insbesondere zu Paaren, zusammengefasst diametral zur Längsachse des jeweiligen Filterelements gegenüberliegend an der zuordenbaren Endkappe vorspringend angeordnet.

Das jeweilige Kupplungsteil kann aus einem Bolzen, einem Steg oder einer Platte gebildet sein.

Des Weiteren besteht die vorteilhafte Möglichkeit, die einander zuordenbaren Kupplungsteile bei einer vorgebbaren Anzahl auf unterschiedlichen Durchmessern und/oder auf unterschiedlichen Höhen und Tiefen, relativ zu der jeweilig zuordenbaren Endkappe des Filterelements gesehen, an dieser anzuordnen.

Nachstehend ist die Erfindung anhand eines in der Zeichnung dargestellten Ausführungsbeispiels im Einzelnen erläutert. Es zeigen:
- Fig. 1: einen Längsschnitt eines Filtergehäuses mit abgenommenem Gehäusedeckel, einem eingesetzten Alt-Filterelement und einem damit gekuppelten, nur teilweise gezeigten Neu-Filterelement, die mit einem Ausführungsbeispiel der erfindungsgemäßen Vorrichtung versehen sind;
- Fig. 2: eine perspektivische Schrägansicht eines gesondert dargestellten Filterelements, versehen mit einem Ausführungsbeispiel der erfindungsgemäßen Vorrichtung;
- Fig. 3: einen vergrößert gezeichneten Teil-Längsschnitt, wobei der Bereich der Kupplungseinrichtungen von Alt- und Neu-Filterelement gemäß dem Ausführungsbeispiel der erfindungsgemäßen Vorrichtung im eingekuppelten Zustand gezeigt ist;
- Fig. 4: eine perspektivische Schrägansicht, in der der Kupplungseingriff des Neu-Filterelements mit dem im Filtergehäuse befindlichen Alt-Filterelement am Beginn eines Austauschvorgangs dargestellt ist;
- Fig. 5: eine der Fig. 4 entsprechende Darstellung, in der der Zustand beim Austauschvorgang nach Verdrehen des Filterelementverbundes gezeigt ist;
- Fig. 6: eine gegenüber Fig. 4 und 5 vergrößert und abgebrochen gezeichnete Teil-Seitenansicht des in Fig. 5 gezeigten Zustands mit demgegenüber um 30° verdrehter Blickrichtung;
- Fig. 7: eine in größerem Maßstab gezeichnete perspektivische Schrägansicht lediglich der Endkappen von Neu- und Alt-Filterelement mit zugehörigen Kupplungseinrichtungen gemäß dem Ausführungsbeispiel der Erfindung, wobei der Zustand vor dem Einkuppeln dargestellt ist;
- Fig. 8: eine der Fig. 3 entsprechende Darstellung, wobei ein zweites Ausführungsbeispiel der Vorrichtung dargestellt ist;
- Fig. 9: eine perspektivische Schrägansicht der aus dem Filtergehäuse teilweise ausgezogenen Filterelemente, versehen mit einem dritten Ausführungsbeispiel der Vorrichtung; und
- Fig. 10: einen vergrößert gezeichneten Teil-Längsschnitt, in dem die Kupplungseinrichtungen gemäß dem dritten Ausführungsbeispiel der Vorrichtung in eingekuppeltem Zustand gezeigt sind.

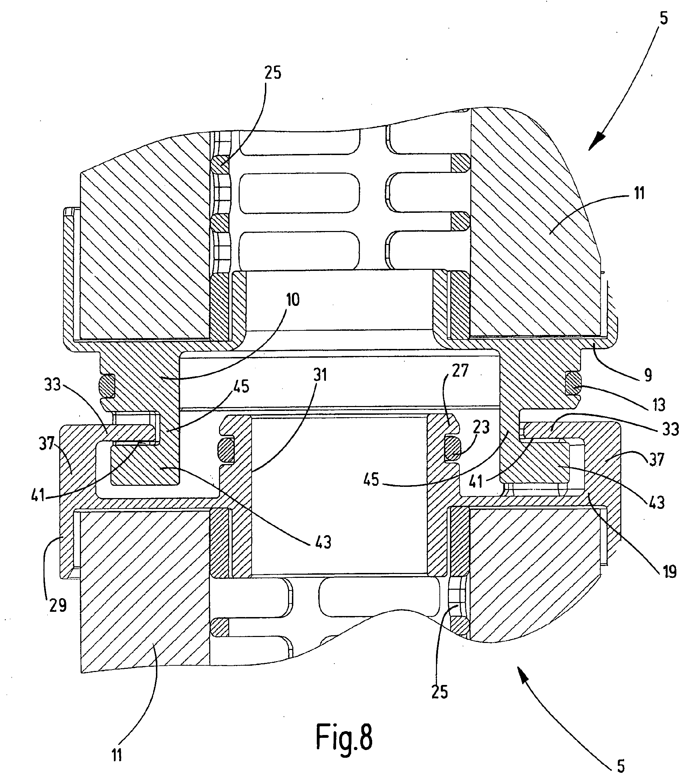

Die Ausführungsformen der Fig. 8 bis 10 dienen lediglich der Erläuterung des Hintergrundes der Erfindung und sind nicht Gegenstand eines Anspruches.

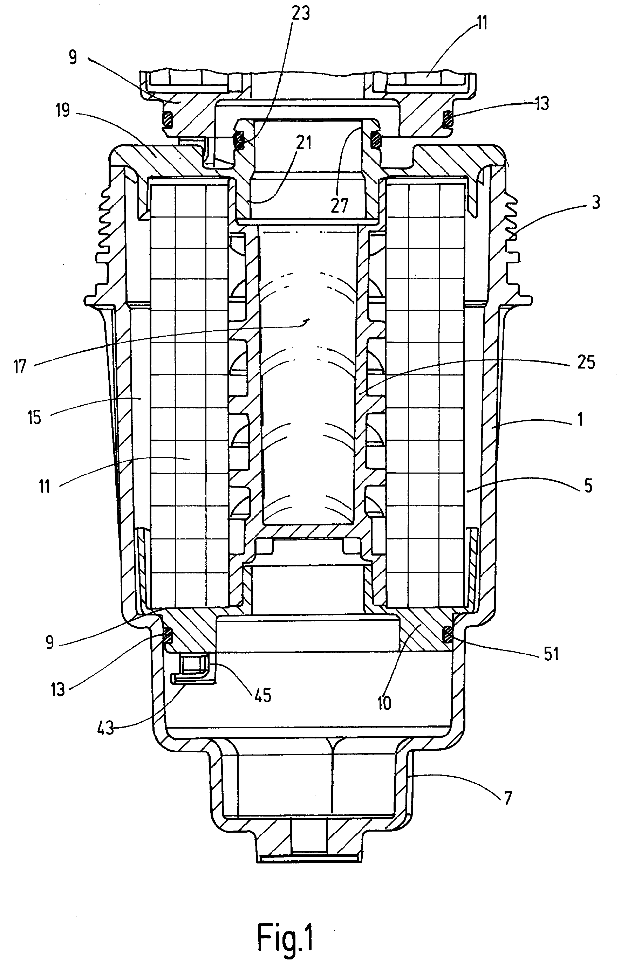

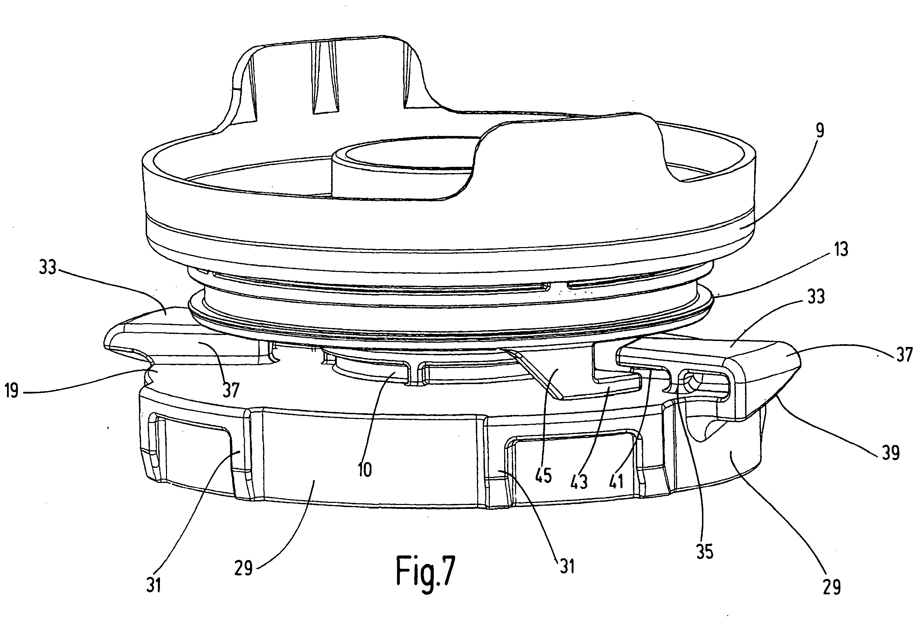

In den Fig. 1 bis 7, in denen ein erstes Ausführungsbeispiel der erfindungsgemäßen Vorrichtung gezeigt ist, ist ein zugeordnetes Filtergehäuse 1 jeweils ohne Gehäusedeckel oder -kopf dargestellt, der von einem am offenen Ende des Gehäuses 1 befindlichen Außengewinde 3 abgeschraubt ist. Wie am deutlichsten die Fig. 1 zeigt, weist das das auszutauschende Alt-Filterelement 5 aufnehmende Filtergehäuse 1 die Form eines runden Topfes mit geschlossenem Boden 7 auf. Das eingesetzte Filterelement 5 weist an seiner unteren Endkappe 9, die die Einfassung für das untere Ende des hohlzylindrischen Filtermaterials 11 des Filterelements 5 bildet, am Außenumfang eines nach unten vorstehenden Ringkörpers 10 einen Dichtring 13 auf. Bei in das Filtergehäuse 1 eingesetztem Filterelement 5, s. Fig. 1, bildet der Dichtring 13 die Abdichtung zwischen dem an der Außenseite des Filtermaterials 11 befindlichen Raum 15 im Filtergehäuse 1 und dem inneren Filterhohlraum 17, der vom Filtermaterial 11 umgeben ist. Beim Filtriervorgang, bei dem das Filtermaterial von außen nach innen durchströmt ist, bildet der äußere Raum 15 die Unfiltratseite, während der innere Filterhohlraum 17 die Filtratseite bildet. Der nicht gezeigte Gehäusedeckel oder -kopf weist, wie bei Filtervorrichtungen üblich, Fluideinlass und Fluidauslass sowie die zugehörigen Fluidführungen auf, über die das Unfiltrat in den Raum 15 ein-und das Filtrat aus dem inneren Hohlraum 17 über eine in der oberen Endkappe 19 des Filterelements 5 gebildete zentrale Öffnung 21 hindurch austritt. Ein am Rand dieser Öffnung 21 befindlicher Dichtring 23 bildet dabei die Abdichtung an der zum Fluidauslass führenden, im (nicht gezeigten) Gehäusekopf befindlichen Fluidführung. Bei der von außen nach innen erfolgenden Durchströmung des Filtermaterials 11 beim Filtriervorgang ist das Filtermaterial 11 an seiner Innenseite an einem fluiddurchlässigen Stützrohr 25 abgestützt, das den inneren Filterhohlraum 17 umgibt und sich von unterer Endkappe 9 zur oberen Endkappe 19 erstreckt.

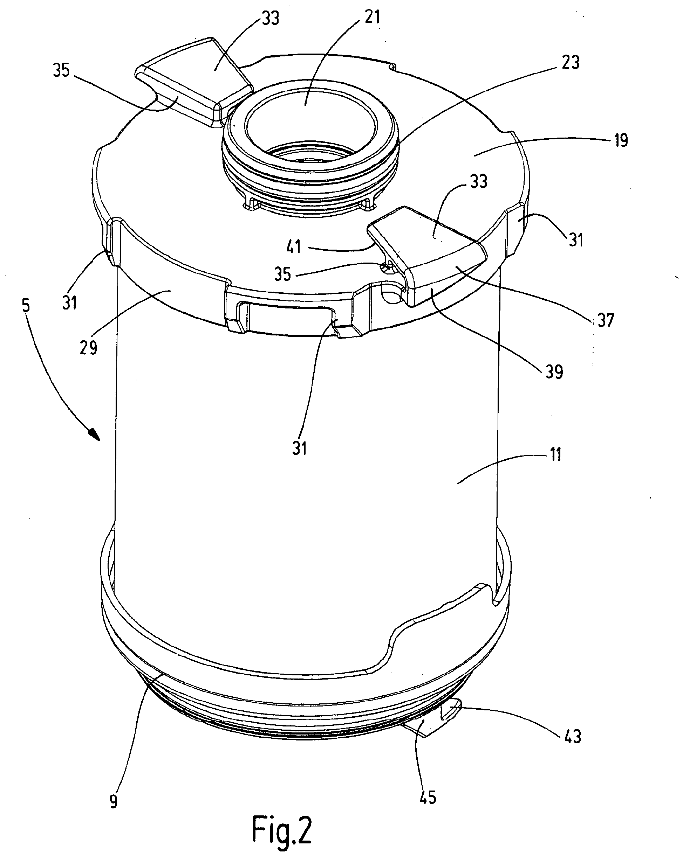

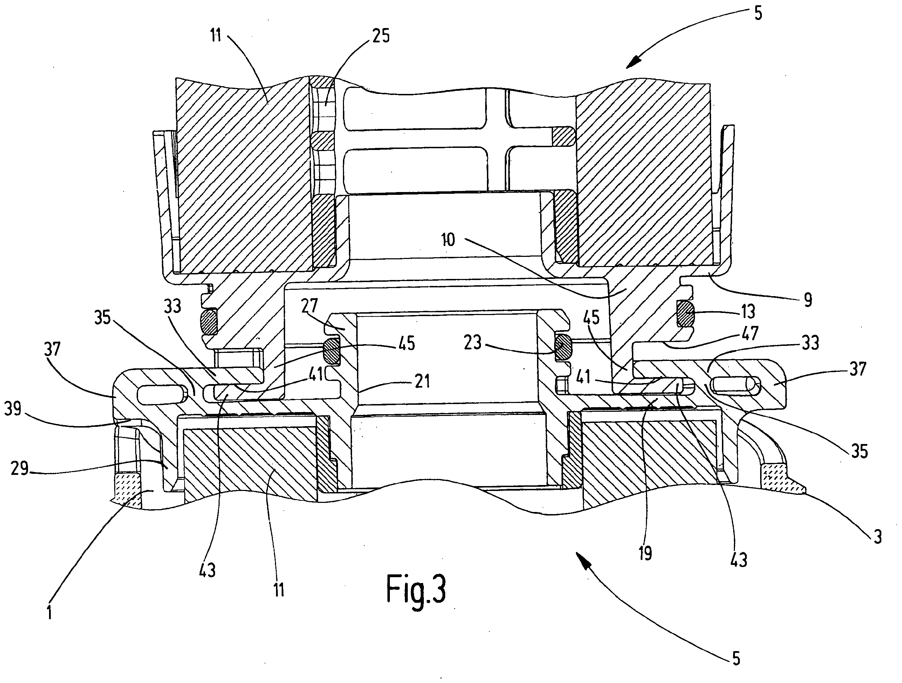

Die Ausbildung der Endkappen 9 und 19 und der an diesen befindlichen Kupplungseinrichtungen ist am deutlichsten den Fig. 2 und 3 entnehmbar. Die obere Endkappe 19 weist an ihrer ebenflächigen Oberseite einen die Öffnung 21 umgebenden, zur Zylinderachse des Filterelements 5 koaxialen Anschlussstutzen 27 auf, der im eingesetzten Zustand die Verbindung zum (nicht gezeigten) Filtratauslass bildet und mit dem Dichtring 23 versehen ist. Der nach unten umgelegte, die Einfassung des Filtermaterials 11 bildende Umfangsrand 29 ist durch radial vorstehende Rippen 31, die ein nach unten offenes U umschreiben, unrund gestaltet. Diese Rippen 31 begrenzen Taschen, die Griffstellen bilden, die einem Bediener das bequeme Verdrehen des Filterelements 5 ermöglichen. Die der Endkappe 19 zugehörige Kupplungseinrichtung weist an zwei diametral gegenüberliegenden Stellen der Endkappe 19 eine Platte 33 auf, die sich in einem geringen, etwa einem Viertel der Höhe des Stutzens 27 entsprechenden Abstand von der Oberseite der Endkappe 19 in zu dieser parallelen Ebene in Radialrichtung erstreckt. Jede Platte 33 ist über Fußteile 35 und 37 mit der Endkappe 19 in Verbindung, wobei die Fußteile 35 vom Umfangsrand 29 radial nach innen versetzt sind, während die Fußteile 37 sich entlang eines Seitenrandes der betreffenden Platte 33 erstrecken, radial außerhalb des Umfangsrandes 29 diesen übergreifen und außerhalb des Umfangsrandes 29 eine zur Ebene der Oberseite schräg verlaufende Nockenbahn 39 bilden. Auf je einer Seite jeder Platte 33 ist zwischen dem radial inneren Fußteil 35 und dem radial innenliegenden Ende der Platte 33 ein Schlitz 41 gebildet, in den zur Bildung einer Art Bajonettverschluss ein Haken 43 der Kupplungseinrichtung an der Endkappe 9 eines Neu-Filterelements 5 für einen Einkuppelvorgang einfahrbar ist. Die Fig. 3 zeigt diesen eingefahrenen, gekuppelten Zustand, bei dem durch eine Relativdrehung des einzuwechselnden Filterelements 5 in jeden Schlitz 41 ein in Umfangsrichtung, d.h. in Drehrichtung, vorstehender Kupplungshaken 43 eingreift. Diese sind, wie Fig. 3 zeigt, am unteren Ende des Ringkörpers 10 der unteren Endkappe 9 in zueinander diametraler Lage an axial vorspringenden Fußteilen 45 derart angeformt, dass sie sich in einem Abstand von der Unterseite 47 der Endkappe 9 befinden, der größer ist als die Dicke der Platten 33. Bei durch Drehen eingefahrenem Haken 43 in die Schlitze 41 bilden die Fußteile 37 mit ihrem Verlauf entlang eines Seitenrandes der Platten 33 für die Drehbewegung einen Anschlag, so dass bei weiterem Verdrehen des Neu-Filterelements 5 das mit ihm gekuppelte Alt-Filterelement 5 mitgedreht wird.

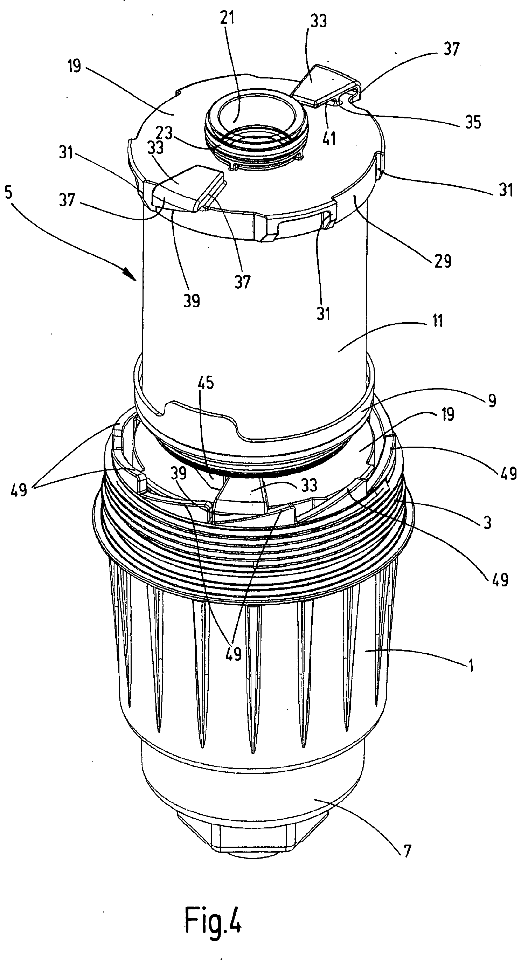

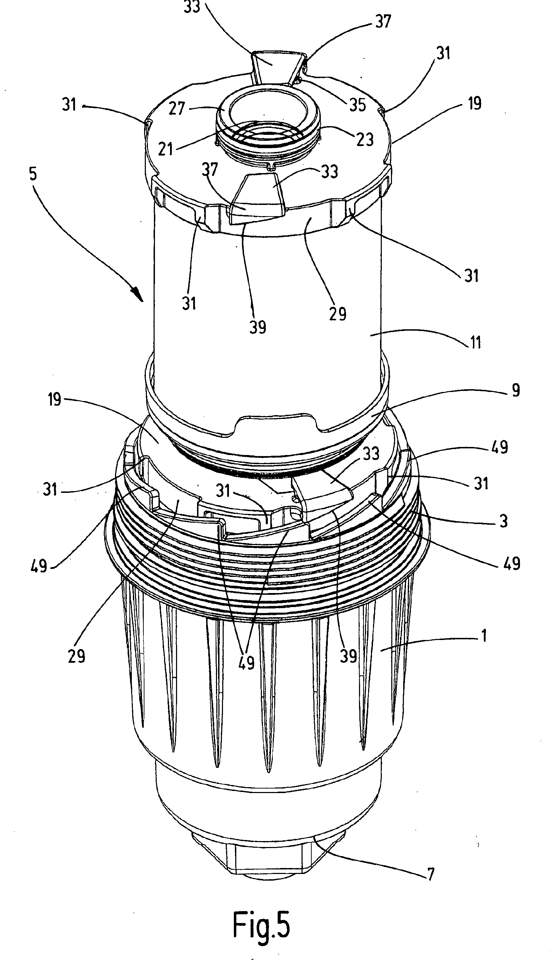

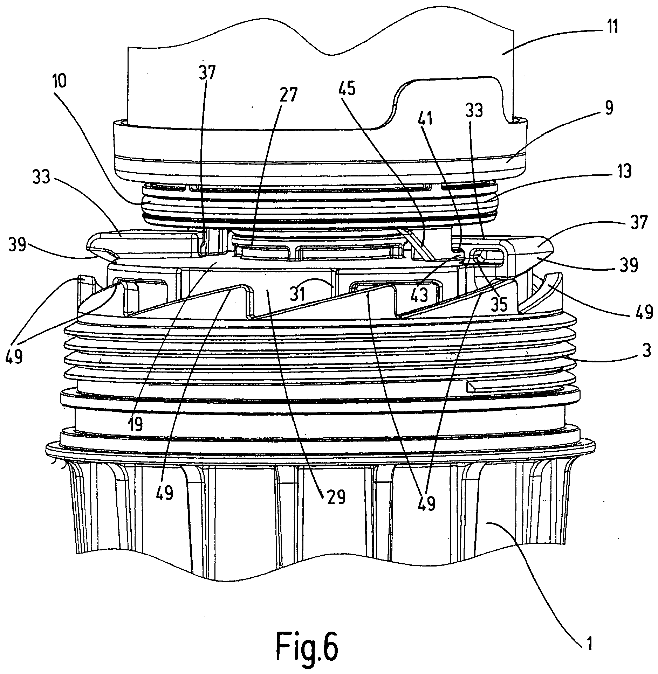

Bei dem durch eine Drehbewegung entgegen dem Uhrzeigersinn hergestellten Kupplungszustand, wie er in Fig. 4 dargestellt ist, kann das Alt-Filterelement 5 durch Ziehen am Neu-Filterelement 5 herausgezogen werden. Beim gezeigten Beispiel, bei dem, wie aus Fig. 4 bis 6 ersichtlich ist, am Umfang des Filtergehäuses 1 am Öffnungsrand oberhalb des Außengewindes 3 eine Folge vorstehender, schräger Rampen 49 gebildet ist, kann der Ausziehvorgang dadurch weiter erleichtert werden, dass der Bediener die Drehbewegung entgegen dem Uhrzeigersinn fortsetzt. Dabei laufen die Nockenbahnen 39 der Platten 33 des Alt-Filterelements 5 an den Rampen 49 des Filtergehäuses 1 auf, so dass beim Fortgang der Drehbewegung aus der in Fig. 4 gezeigten Position in die in Fig. 5 und 6 gezeigte Position der Verbund der beiden Filterelemente 5 eine Hubbewegung in Ausziehrichtung erfährt. Dadurch wird der Dichtring 13, s. Fig. 1, aus seinem abdichtenden Sitz an der eingezogenen Wandfläche 51 des Filtergehäuses 1 ausgehoben, so dass die restliche Ausziehbewegung mühelos erfolgen kann.

Die Fig. 8 zeigt ein zweites Ausführungsbeispiel mit vereinfacht ausgebildeter oberer Endkappe 19. Im Unterschied zum ersten Ausführungsbeispiel weist die die Kupplungseinrichtung an den Kappen 19 bildende Platte 33 kein über den Umfangsrand 29 radial auskragendes Fußteil mit einer Nockenbahn auf, die in Zusammenwirkung mit Rampen 49 am Gehäuse 1 einen Axialhub bei einer Drehbewegung erzeugen würden. Dafür sind die axialen Weiten der Schlitze 41 sowie die axiale Länge der Fußteile 45 an der unteren Endkappe 9 weit größer gewählt als beim ersten Ausführungsbeispiel. Für die Bildung der Bajonettverschluss-Kupplungsverbindung, durch Einfahren der Haken 43 in die Schlitze 41, steht daher ein weit größerer Spielraum zur Verfügung, so dass der Vorgang des Einkuppelns erleichtert ist.

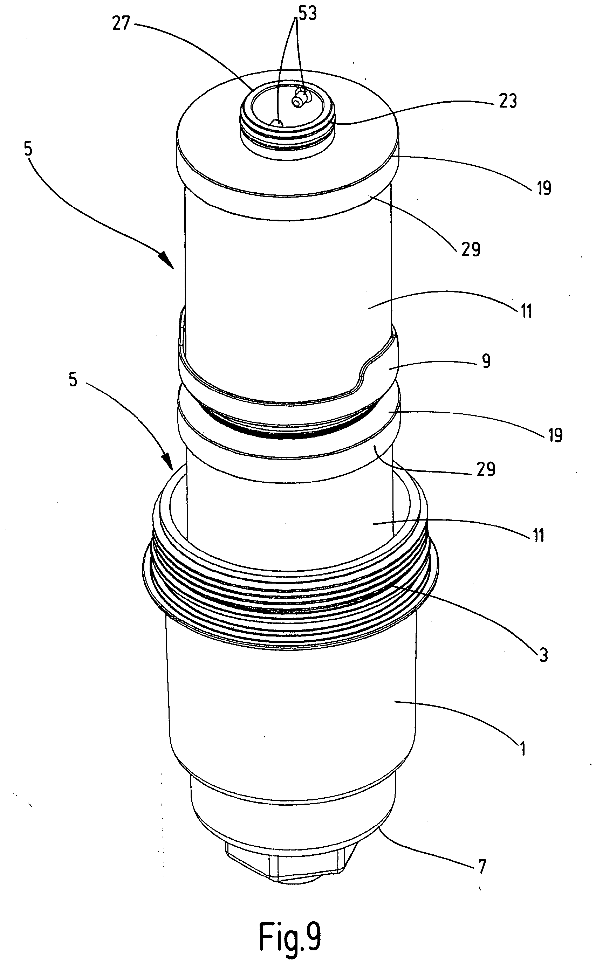

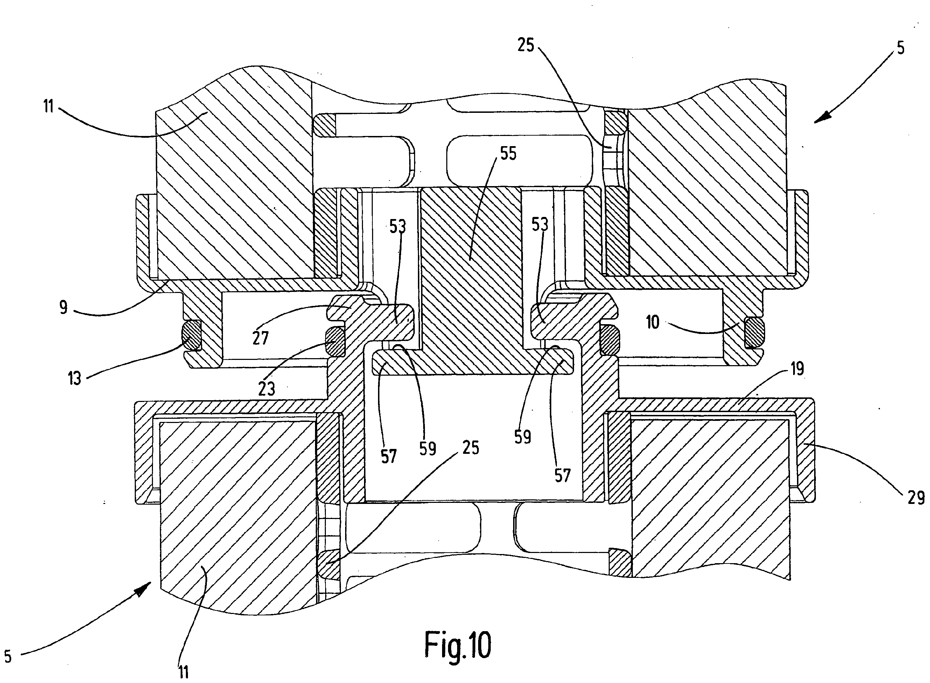

Die Fig. 9 und 10 verdeutlichen ein drittes Ausführungsbeispiel. Wie beim zweiten Ausführungsbeispiel ist die obere Endkappe 19 ohne über den Umfangsrand 29 auskragende Nockenbahn 39 ausgebildet. Die dieser oberen Endkappe zugehörige Kupplungseinrichtung ist durch zwei Bolzen 53 gebildet, die am oberen Öffnungsrand des Stutzens 27, zueinander diametral angeordnet, von der Innenwand des Stutzens 27 gegeneinander in radialer Richtung vorspringen. Als Kupplungseinrichtung der unteren Endkappe 9 weist diese an einem koaxialen Träger 55 endseitig vorgesehene Flügel 57 auf, die sich in einer Radialebene erstrecken und zwischen denen sich Lücken für den Durchtritt der Bolzen 53 befinden, die durch Verdrehen des Alt-Filterelements 5 in den Kupplungseingriff gelangen. Dieser Zustand ist in Fig. 10 gezeigt, bei dem die Oberseite 59 der Flügel 47 die Anlage für die Bolzen 53 bildet.

## Patentansprüche

1. Kombination aus einem Filtergehäuse (1) und einem in dem Filtergehäuse (1) zumindest teilweise aufgenommenen, insbesondere verbrauchten, Alt-Filterelement (5) und einem in dieses Filtergehäuse (1) einzuwechselnden, insbesondere unverbrauchten, Neu-Filterelement (5), das mit einer Kupplungseinrichtung (43) versehen ist, die mit einer weiteren Kupplungseinrichtung (33) am Alt-Filterelement (5) eine wieder lösbare Kupplung ausbildet, die im gekuppelten Zustand das Ausbringen des Alt-Filterelements (5) aus dem Filtergehäuse (1) mittels des Neu-Filterelements (5) ermöglicht, **dadurch gekennzeichnet, dass** das Filtergehäuse (1) randseitig über einen Randverlauf mit einzelnen, in Auszugsrichtung des Filterelements (5) vorstehenden Rampen (49) verfügt, die zumindest teilweise während des Verdrehens des Filterelementverbundes (5) von mindestens einem Kupplungsteil, insbesondere dem Kupplungsteil (33) des Alt-Filterelements (5), derart anfahrbar sind, dass die axiale Auszugsbewegung des Filterelements (5) aus dem Filtergehäuse (1) erleichtert ist.

2. Vorrichtung nach Anspruch 1, **dadurch gekennzeichnet, dass** Alt- (5) und Neu-Filterelement (5) zumindest im Umfang der herzustellenden Kupplung gleich ausgebildet sind, indem das jeweilige Filterelement (5) an seiner einen Stirnseite die eine Kupplungseinrichtung (43) und an seiner anderen, gegenüberliegenden Stirnseite die weitere Kupplungseinrichtung (33) aufweist.

3. Vorrichtung nach Anspruch 1 oder 2, **dadurch gekennzeichnet, dass** die jeweilige Kupplungseinrichtung (33, 43) eines jeden Filterelements (5) einstückiger Bestandteil einer zuordenbaren Endkappe (9, 19) ist, die dem Festlegen des filtrierenden Elementmaterials (11) dieses Filterelements (5) dient.

4. Vorrichtung nach einem der vorstehenden Ansprüche, **dadurch gekennzeichnet, dass** die jeweilige die Kupplung bildende Kupplungseinrichtung vorspringende Kupplungsteile (33, 43) aufweist, die, ausgehend von einem ungekuppelten Zustand, durch Verdrehen des einen Filterelements (5) gegen das andere Filterelement (5), insbesondere des Neu-Filterelements (5), gegen das Alt-Filterelement (5) unter Bildung des gekuppelten Zustands in Eingriff miteinander gelangen.

5. Vorrichtung nach einem der vorstehenden Ansprüche, **dadurch gekennzeichnet, dass** die in Eingriff miteinander befindlichen Kupplungsteile (33, 43) derart eine axiale Kraftübertragung zwischen den gekuppelten Filterelementen (5) entlang deren jeweiliger Längsachse erlauben, dass durch Ziehen von Hand am Neu-Filterelement (5) das Alt-Filterelement (5) aus dem Filtergehäuse (1) entfernbar ist.

6. Vorrichtung nach einem der vorstehenden Ansprüche, **dadurch gekennzeichnet, dass** nach Entfernen des Alt-Filterelements (5) aus dem Filtergehäuse (1) die Kupplung des Verbundes von Alt- (5) und Neu-Filterelement (5) lösbar ist und das Neu-Filterelement (5) in dieses Filtergehäuse (1) anschließend einsetzbar ist.

7. Vorrichtung nach einem der vorstehenden Ansprüche, **dadurch gekennzeichnet, dass** die Kupplungsteile (33, 43) zu Gruppen, insbesondere zu Paaren, zusammengefasst diametral zur Längsachse des jeweiligen Filterelements (5) gegenüberliegend an der zuordenbaren Endkappe (9, 19) vorspringend angeordnet sind.

8. Vorrichtung nach einem der vorstehenden Ansprüche, **dadurch gekennzeichnet, dass** das jeweilige Kupplungsteil aus einem Steg (43) oder einer Platte (33) gebildet ist.

9. Vorrichtung nach einem der vorstehenden Ansprüche, **dadurch gekennzeichnet, dass** die einander zuordenbaren Kupplungsteile (33, 43) bei einer vorgebbaren Anzahl auf unterschiedlichen Durchmessern und/oder auf unterschiedlichen Höhen und Tiefen, relativ zu der jeweils zuordenbaren Endkappe (9, 19) des Filterelements (5) gesehen, an dieser anordenbar sind.

## Claims

1. Combination of a filter housing (1) and an old, in particular used, filter element (5) which is at least partially accommodated in the filter housing (1) and a new, in particular unused, filter element (5) which is to be exchanged into this filter housing (1) and which is provided with a coupling device (43) which, with a further coupling device (33) on the old filter element (5), forms a releasable coupling which, in the coupled state, enables the old filter element (5) to be removed from the filter housing (1) by means of the new filter element (5), **characterised in that** on the rim the filter housing (1) has a rim contour with individual ramps (49) which protrude in the withdrawal direction of the filter element (5), which ramps can be approached, at least partially during twisting of the filter element combination (5), by at least one coupling part, in particular the coupling part (33) of the old filter element (5), in such a manner that this facilitates the axial withdrawal movement of the filter element (5) out of the filter housing (1).

2. Device according to claim 1, **characterised in that** old filter element (5) and new filter element (5) are designed identically at least in the circumference of the coupling to be produced, **in that** the respective filter element (5) has the one coupling device (43) on its one end face and the further coupling device (33) on its other, opposing end face.

3. Device according to claim 1 or 2, **characterised in that** the respective coupling device (33, 43) of each filter element (5) is an integral part of an associated end cap (9, 19) which is used to fix the filtering element material (11) of this filter element (5).

4. Device according to one of the preceding claims, **characterised in that** the respective coupling device forming the coupling has protruding coupling parts (33, 43) which, starting from an uncoupled state, come into engagement with each other by twisting the one filter element (5) against the other filter element (5), in particular the new filter element (5) against the old filter element (5), to create the coupled state.

5. Device according to one of the preceding claims, **characterised in that** the coupling parts (33, 43) in engagement with each other allow axial force transmission between the coupled filter elements (5) along their respective longitudinal axis in such a manner that by pulling manually on the new filter element (5) the old filter element (5) can be removed from the filter housing (1).

6. Device according to one of the preceding claims, **characterised in that**, after removing the old filter element (5) from the filter housing (1), the coupling of the combination of old filter element (5) and new filter element (5) is releasable and subsequently the new filter element (5) can be inserted into this filter housing (1).

7. Device according to one of the preceding claims, **characterised in that** the coupling parts (33, 43) combined into groups, in particular into pairs, are arranged so as to protrude diametrically opposite to the longitudinal axis of the respective filter element (5) on the associated end cap (9, 19).

8. Device according to one of the preceding claims, **characterised in that** the respective coupling part is formed from a web (43) or a plate (33).

9. Device according to one of the preceding claims, **characterised in that** the mutually assignable coupling parts (33, 43) in a predefinable number can be arranged on the end cap at different diameters and/or at different heights and depths, viewed in relation to the respectively associated end cap (9, 19) of the filter element (5).

## Revendications

1. Combinaison d'une enveloppe (1) de filtre et d'un élément (5) de filtre vieux, notamment usagé, logé au moins en partie dans l'enveloppe (1) du filtre et d'un élément (5) de filtre nouveau, notamment non usagé, à introduire en remplacement dans cette enveloppe (1) du filtre, qui est pourvu d'un dispositif (43) d'accouplement, qui constitue, avec un autre dispositif (33) d'accouplement sur l'élément (5) de filtre vieux, un accouplement pouvant être redéfait, qui, à l'état accouplé, rend possible de faire partir l'élément (5) de filtre vieux de l'enveloppe (1) du filtre au moyen de l'élément (5) de filtre nouveau, **caractérisé en ce que** l'enveloppe (1) du filtre dispose, du côté du bord, d'un tracé de bord ayant diverses rampes (49) qui sont en saillie dans la direction d'extraction de l'élément (5) de filtre et qui peuvent, au moins en partie pendant la rotation du composite (5) d'élément de filtre, être abordées par au moins une partie de l'accouplement, notamment la partie (33) de l'accouplement de l'élément (5) de filtre vieux, de manière à faciliter le mouvement d'extraction axial de l'élément (5) de filtre de l'enveloppe (1) du filtre.

2. Dispositif suivant la revendication 1, **caractérisé en ce que** l'élément (5) de filtre vieux et l'élément (5) de filtre nouveau sont constitués pareillement, au moins dans le pourtour de l'accouplement à produire, par le fait que l'élément (5) de filtre respectif a, sur l'un de ses côtés frontaux, le un dispositif (43) d'accouplement et sur son autre côté frontal opposé, l'autre dispositif (33) d'accouplement.

3. Dispositif suivant la revendication 1 ou 2, **caractérisé en ce que** le dispositif (33, 43) d'accouplement respectif de chaque élément (5) de filtre est une partie constitutive d'une seule pièce d'une coiffe (9, 19) d'extrémité pouvant être associée, qui sert à la fixation de la matière (11) filtrante de cet élément (5) de filtre.

4. Dispositif suivant l'une des revendications précédentes, **caractérisé en ce que** le dispositif d'accouplement formant respectivement l'accouplement a des parties (33, 43) d'accouplement en saillie qui, à partir d'un état désaccouplé, arrive par rotation du un élément (5) de filtre par rapport à l'autre élément (5) de filtre, notamment de l'élément (5) de filtre nouveau par rapport à l'élément (5) de filtre vieux, en prise entre eux, avec formation de l'état accouplé.

5. Dispositif suivant l'une des revendications précédentes, **caractérisé en ce que** les parties (33, 43) de l'accouplement se trouvant en prise entre elles permettent une transmission de force axiale entre les éléments (5) de filtre accouplés le long de leur axe longitudinal respectif de manière à ce que, en tirant à la main l'élément (5) de filtre nouveau, l'élément (5) de filtre vieux puisse être retiré de l'enveloppe (1) du filtre.

6. Dispositif suivant l'une des revendications précédentes, **caractérisé en ce qu'**après avoir retiré l'élément (5) de filtre vieux de l'enveloppe (1) du filtre, l'accouplement du composite de l'élément (5) de filtre vieux et de l'élément (5) de filtre nouveau peut être défait et l'élément (5) de filtre nouveau peut être utilisé ensuite dans cette enveloppe (1) du filtre.

7. Dispositif suivant l'une des revendications précédentes, **caractérisé en ce que** les parties (33, 43) de l'accouplement sont disposées en saillie sur les coiffes (9, 19) d'extrémité pouvant être associées en étant rassemblées en groupes, notamment en paires, de manière opposée diamétralement par rapport à l'axe longitudinal de l'élément (5) de filtre respectif.

8. Dispositif suivant l'une des revendications précédentes, **caractérisé en ce que** la partie de l'accouplement respectif est formée d'une languette (43) ou d'une plaque (33).

9. Dispositif suivant l'une des revendications précédentes, **caractérisé en ce que** les parties (33, 43) d'accouplement pouvant être associées l'une à l'autre peuvent, pour un nombre pouvant être donné à l'avance, de diamètres différents et/ou de hauteurs et de profondeurs différentes, être disposées, considéré par rapport à la coiffe (9, 19) pouvant être associée respectivement de l'élément (5) de filtre, être montées sur celle-ci.
